# EUROPÄISCHE PATENTSCHRIFT

(11) **EP 0 896 238 B1**
(45) Veröffentlichungstag und Bekanntmachung des Hinweises auf die Patenterteilung: **21.02.2001**
(21) Anmeldenummer: 98113754.0
(22) Anmeldetag: 23.07.1998
(51) Int. Cl.: G02B 21/22, G02B 21/26, G02B 21/34

(54) **Stereomikroskop mit einem Probenwechsler**
Stereomicroscope with sample changer
Stéréomicroscope avec changeur d'échantillons

(30) Priorität: 06.08.1997 DE 19733990
(43) Veröffentlichungstag der Anmeldung: 10.02.1999
(73) Patentinhaber: Carl Zeiss Jena GmbH, 07740 Jena (DE)
(72) Erfinder: Kraft, Winfried, Dipl.-Ing., 35614 Asslar-Werdorf (DE); Schwab, Klaus Dieter, 89520 Heidenheim (DE)
(74) Vertreter: Hampe, Holger

(56) Entgegenhaltungen:
- DE-A- 1 598 637
- DE-A- 2 139 153
- FR-A- 369 790
- US-A- 3 762 798
- US-A- 4 722 598
- US-A- 4 764 342
- US-A- 5 367 401
- PATENT ABSTRACTS OF JAPAN vol. 018, no. 096 (P-1694), 16. Februar 1994 (1994-02-16) -& JP 05 297282 A (NIPPON STEEL CORP), 12. November 1993 (1993-11-12)

## Beschreibung

Stereomikroskope werden zunehmend gern für verschiedene mikroskopische Anwendungen wie Botanik, Zoologie, Gesteinskunde, Mikroelektronik genutzt, da die Objekte im Mikroskop seitenrichtig und räumlich erscheinen und der Bezug zum Objekt bei kleinen Vergrößerungen und großen Objektfeldern gewahrt bleibt.
Für die Untersuchung vieler unterschiedlicher Proben wird ein geeigneter Probenwechsler benötigt.
Für Mikroskope an sich sind Probenwechsler in Karussellform oder als Drehtisch beispielsweise aus DE 2139153, DE 3620877, WO 93/06516 bekannt.
DE 1598637 beschreibt eine Probenwechseleinrichtung für strahlenoptische Geräte.

Aufgabe der Erfindung ist die Ausbildung eines Stereomikroskopes so, daß viele unterschiedliche Proben einer schnellen Beobachtung zugänglich sind.
Die Aufgabe wird durch die Merkmale von Anspruch 1 gelöst Bevorzugte Weiterbildungen sind Gegenstand der abhängigen Ansprüche.

Die Erfindung hat besondere Vorteile bei der Präsentation auf Messen, Ausstellungen oder Museen, da verschiedenen Kunden mit verschiedenen Interessen auf einfache Weise ein Objekt ihres Interessengebietes präsentiert werden kann.
Insbesondere in Schulen können alle Arten von Proben , vom Insekt bis zur Materialprobe, angesehen werden.
Besonders vorteilhaft ist hierbei, daß der erfindungsgemäße Probenwechsler mit handelsüblichen Petrischalen beliebig bestückt werden kann, wobei durch eine gemeinsame Abdeckung die Proben vor Beschädigung oder Entnahme geschützt sind.
Die Betrachtung kann unter bezüglich der Ausrichtung zum Stativ sowie der Beleuchtungsbedingungen reproduzierbaren Bedingungen erfolgen.
Ein schneller motorisierter und programmierbarer Wechsel zwischen verschiedenen Proben ist möglich, insbesondere, wenn der eingestellte Schärfenbereich des Objektivs bei relativ flachen Proben erhalten bleiben kann.
Eine automatische Nachstellung der Fokussierung kann ebenfalls vorgesehen sein.
Nicht zuletzt kann vorteilhaft durch Austausch des Außenringes ein Wechsel zwischen verschiedenen Probenhaltern erfolgen, ohne in die optische und mechanische Fixierung des Mikroskops eingreifen zu müssen.
Die Erfindung wird nachstehend anhand der schematischen Darstellungen näher erläutert.
Es zeigen:
Fig.1: Ein Stereomikroskop in Seitenansicht mit dem erfindungsgemäßen Probenwechsler.
Fig. 2 und 3 : Den Aufbau des Probenwechslers
Fig. 4: Einen Teilschnitt durch den Probenwechsler

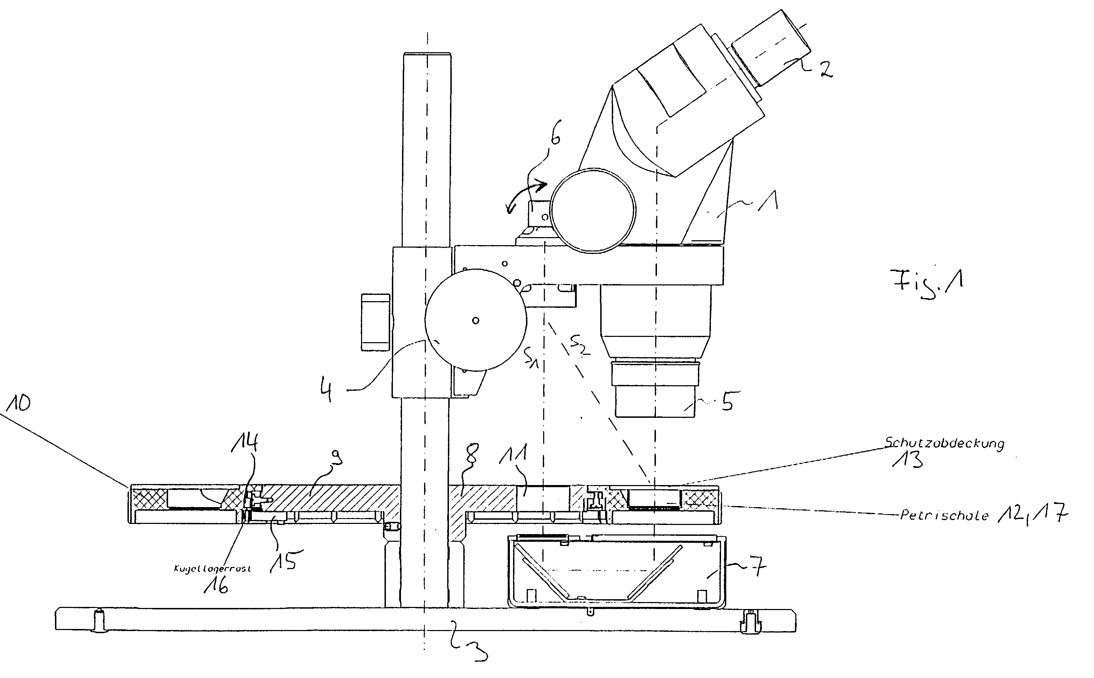

Das in Fig. 1 dargestellte Stereomikroskop 1, von dem in Seitenansicht ein Okular 2 dargestellt ist, ist an einem Säulenstativ 3 , mittels eines Fokussierknopfes 4 vertikal verstellbar, befestigt.
Es weist ein wechselbares Objektiv 5 auf.
Eine schwenkbare Lichtquelle 6 dient zur Objektbeleuchtung, in der dargestellten Stellung S1 als Durchlichtbeleuchtung über eine Spiegelgruppe 7, in der gestrichelten Schwenkstellung S2 zur Auflichtbeleuchtung.
Am Säulenstativ 3 ist der erfindungsgemäße Probenwechsler 8 befestigt, der einen inneren Teil 9 sowie einen um eine Drehachse D drehbaren äußeren Teil 10 aufweist. Der innere Teil 9 weist einen Durchbruch 11 zwischen der Lichtquelle 6 und der Spiegelgruppe 7 zur Durchlichtbeleuchtung auf.
Im äußeren Teil 10 sind Ausnehmungen 12 zur Aufnahme handelsüblicher Petrischalen 17 vorgesehen, in denen sich die unterschiedlichsten Proben befinden können. Oberhalb der Ausnehmungen ist eine ringförmige durchsichtige Probenabdeckung 13 vorgesehen.

Die Ausnehmungen sind an der zur Drehachse D gewandten Seite angeschrägt, um eine ungehinderte Auflichtbeleuchtung in der Stellung S2 der Lichtquelle 6 zu gewährleisten.
Der äußere Teil 10 ist über Rollen 14 am inneren Teil 9 gelagert, wobei eine Rastfeder 15 mit einer Kugelrastung 16 dafür sorgt, daß die Drehung des äußeren Teils 10 in definierten Rastschritten erfolgt, wodurch eine definierte Stellung der jeweiligen Probe im Strahlengang des Stereomikroskops ermöglicht wird.

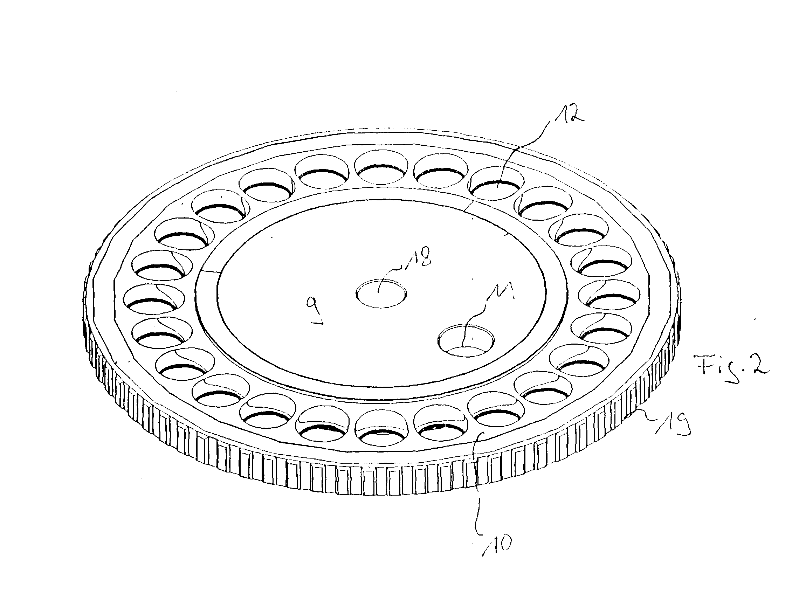

Fig. 2 zeigt eine Schrägansicht des Probenwechslers mit den Ausnehmungen 12, den Öffnungen 11 für die Beleuchtung sowie 18 für die Stativsäule sowie Griffrändelungen 19 zur Handdrehung durch den Betrachter.

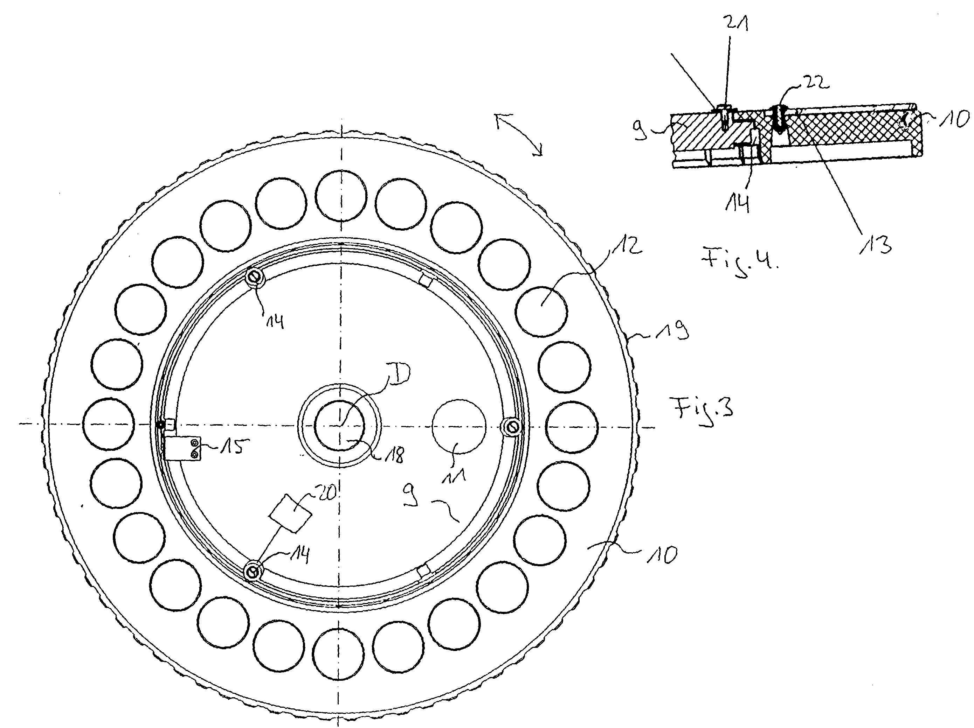

In Fig. 3 sind darüber hinaus die Rastfeder sowie die Laufrollen im Detail dargestellt.
Vorteilhaft kann eine der Laufrollen auch ein motorisches über eine entsprechende Steuerung 20 im inneren Teil 9 angetriebenes Antriebsrad, beispielsweise ein nicht dargestelltes Zahnrad sein, das in entsprechende Getriebemittel , beispielsweise einen nicht dargestellten Zahnkranz , im äußeren Teil 10 eingreift, wodurch dieses auch motorisch angetrieben werden kann.
Fig. 4 zeigt einen teilweisen Schnitt durch den Probenwechsler, wobei erkennbar wird, daß der äußere Teil auswechselbar mit Schrauben 21 am inneren Teil befestigt ist, wobei für die durchsichtige Abdeckung 13, die beispielsweise aus Glas oder Plexiglas besteht, entfernbare Paßstifte 22 vorgesehen sein können, um einerseits die Abdeckung zu sichern und andererseits ein schnelles Auswechseln von Proben zu gewährleisten.

## Patentansprüche

1. Stereomikroskop (1) mit Stativsäule und Probenwechsler (8), dadurch gekennzeichnet dass der Probenwechsler zumindest teilweise um die Stativsäule drehbar ausgebildet ist und auf einer durch den Beobachtungsstrahlengang gehenden Kreisbahn angeordnete Probenaufnahmen (12) aufweist, wobei der Probenwechsler aus einem inneren unbeweglichen Teil (9) und einem ringförmigem äußeren Teil (10) besteht , der die Probenaufnahmen beinhaltet und der äußere Teil am inneren Teil abnehmbar befestigt ist.

2. Stereomikroskop nach Anspruch 1, wobei die Probenaufnahmen (12) einen Durchmesser aufweisen, der zur Aufnahme handelsüblicher Petrischalen (17) geeignet ist.

3. Stereomikroskop nach mindestens einem der vorangehenden Ansprüche, wobei eine gemeinsame abnehmbare durchsichtige Abdeckung (13) auf dem äußeren Teil vorgesehen ist.

4. Stereomikroskop nach Anspruch 3, wobei die Abdeckung (13) ringförmig ist und aus Glas oder Plexiglas oder einem anderen lichtdurchlässigen Material besteht.

5. Stereomikroskop nach mindestens einem der vorangehenden Ansprüche, wobei der innere Teil mindestens eine Öffnung (11) zum Lichtdurchgang einer am Stativ befestigten Lichtquelle (6) zur Durchlichtbeleuchtung aufweist.

6. Stereomikroskop nach mindestens einem der vorangehenden Ansprüche, wobei die Lichtquelle (6) schwenkbar zur wahlweisen Durchlicht - und Auflichtbeleuchtung ist.

7. Stereomikroskop nach mindestens einem der vorangehenden Ansprüche, wobei der Lichtweg der Lichtquelle (6) in der Auflichtstellung die Kreisbahn der Probenaufnahmen schneidet.

8. Stereomikroskop nach mindestens einem der vorangehenden Ansprüche, wobei der äußere Teil an seiner Außenseite eine Griffrändelung (19) zur Handbedienung aufweist.

9. Stereomikroskop nach mindestens einem der vorangehenden Ansprüche, wobei zwischen innerem und äußeren Teil motorisch ansteuerbare Getriebemittel zur Drehung des äußeren Teils vorgesehen sind.

## Claims

1. Stereo microscope (1) with a limb and sample changer (8), characterised in that the sample changer is formed in such a manner as to rotate at least partially about the limb and comprises sample receptacles (12) disposed on a circular track passing through the observation beam path, wherein the sample changer consists of an inner immovable part (9) and an annular outer part (10) which contains the sample receptacles and the outer part is removably attached to the inner part.

2. Stereo microscope according to claim 1, wherein the sample receptacles (12) comprise a diameter which is suitable to receive commercial petri dishes (17).

3. Stereo microscope according to at least one of the preceding claims, wherein a common removable transparent cover (13) is provided on the outer part.

4. Stereo microscope according to claim 3, wherein the cover (13) is annular and consists of glass or plexiglass or another light-permeable material.

5. Stereo microscope according to at least one of the preceding claims, wherein the inner part comprises at least one orifice (11) for light penetration of a light source (6) attached to the limb for transmitted light illumination.

6. Stereo microscope according to at least one of the preceding claims, wherein the light source (6) can pivot between transmitted light illumination and vertical illumination as selected.

7. Stereo microscope according to at least one of the preceding claims, wherein the light path of the light source (6) in the vertical illumination position bisects the circular track of the sample receptacles.

8. Stereo microscope according to at least one of the preceding claims, wherein on its outer surface the outer part comprises grip knurling (19) for manual operation.

9. Stereo microscope according to at least one of the preceding claims, wherein between the inner and outer part, motor-controllable gearing means are provided for rotation of the outer part.

## Revendications

1. Stéréomicroscope (1) avec colonne du pied et changeur d'échantillons (8), caractérisé en ce que le changeur d'échantillons est réalisé d'une manière rotative au moins partiellement autour de la colonne du pied et présente des logements d'échantillon (12) disposés sur une trajectoire circulaire passant à travers la marche des rayons d'observation , où le changeur d'échantillons est constitué d'une partie immobile interne (9) et d'une partie annulaire externe (10), qui contient les logements d'échantillon et la partie externe est fixée amoviblement à la partie interne.

2. Stéréomicroscope selon la revendication 1, où les logements d'échantillon (12) ont un diamètre qui convient pour la réception de boîtes de Pétri (17) usuelles dans le commerce.

3. Stéréomicroscope selon au moins l'une des revendications précédentes, où est prévu un recouvrement (13) commun, retirable et transparent sur la partie externe.

4. Stéréomicroscope selon la revendication 3, où le recouvrement (13) est annulaire et est réalisé en verre ou en plexiglas ou en un autre matériau perméable à la lumière.

5. Stéréomicroscope selon au moins l'une des revendications précédentes, où la partie interne présente au moins une ouverture (11) pour le passage de la lumière d'une source de lumière (6) fixée au pied pour l'éclairage par transmission.

6. Stéréomicroscope selon au moins l'une des revendications précédentes, où la source de lumière (6) est pivotante, pour l'éclairage sélectif par transmission et incident.

7. Stéréomicroscope selon au moins l'une des revendications précédentes, où le chemin optique de la source de lumière (6) en position de lumière incidente coupe la trajectoire circulaire des logements d'échantillon.

8. Stéréomicroscope selon au moins l'une des revendications précédentes, où la partie externe présente à son côté externe un moletage de poignée (19) pour un contrôle manuel.

9. Stéréomicroscope selon au moins l'une des revendications précédentes, où sont prévus entre les parties interne et externe des moyen d'engrenage commandés par moteur pour faire tourner la partie externe.
